# EUROPEAN PATENT SPECIFICATION

(11) **EP 4 629 373 B1**
(45) Date of publication and mention of the grant of the patent: **12.08.2026**
(21) Application number: 25166478.5
(22) Date of filing: 26.03.2025
(51) Int. Cl.: H01M 10/04, C09J 7/30, H01M 4/13

(54) **ELECTRODE SHEET AND SPLICING METHOD OF ELECTRODE SHEET**
ELEKTRODENFOLIE UND SPLEISSVERFAHREN DER ELEKTRODENFOLIE
FEUILLE D'ÉLECTRODE ET PROCÉDÉ D'ÉPISSAGE DE FEUILLE D'ÉLECTRODE

(30) Priority: 27.03.2024 CN 202410361680
(43) Date of publication of application: 08.10.2025
(73) Proprietor: Hithium Tech HK Limited, Kowloon, Hong Kong (HK)
(72) Inventor: GUAN, Wenxin, Fujian 361100 (CN); WANG, Zikai, Fujian 361100 (CN); SU, Songhong, Fujian 361100 (CN)
(74) Representative: RGTH

(56) References cited:
- EP-A1- 4 109 579
- EP-A2- 2 683 002
- KR-B1- 100 819 183

## Description

### TECHNICAL FIELD

The present application relates to the technical field of battery manufacturing, and in particular, to an electrode sheet and a splicing method of an electrode sheet.

### BACKGROUND

During the process of rolling and slitting the electrode sheet of the battery, the electrode sheet needs to be spliced. In the related art, the splicing is performed by attaching an adhesive tape to the ends of two electrode sheets. However, when the seam of the electrode sheets after splicing passes through the rolling assembly, the rolling assembly needs to release pressure until the seam leaves the rolling assembly, and then the rolling assembly re-pressurizes the electrode sheet, which affects the processing effect and processing efficiency of the electrode sheet.

### SUMMARY

The present disclosure provides an electrode sheet and a splicing method of an electrode sheet.

In the first aspect, the present disclosure provides an electrode sheet, comprising: a first electrode sheet band, a second electrode sheet band, and an adhesive tape. The first electrode sheet band has a first end along a length direction of the first electrode sheet band. A length direction of the second electrode sheet band is the same as the length direction of the first electrode sheet band, and the second electrode sheet band has a second end along the length direction of the second electrode sheet band. The adhesive tape is attached to a surface of the first end and a surface of the second end, and the adhesive tape comprises: a base film and a glue layer. The base film comprises a coating area and a blank area, and the blank area is arranged around the coating area. The glue layer is coated on at least part of the coating area, and the coating area is bonded to the surface of the first end and the surface the second end through the glue layer.

In the second aspect, the present application also provides a splicing method of an electrode sheet. The splicing method is used for splicing the electrode sheet described in any one of the first aspect. The adhesive tape comprises a first adhesive tape, a second adhesive tape and a third adhesive tape. The splicing method comprises:
aligning the first end of the first electrode sheet band with the second end of the second electrode sheet band;
attaching the first adhesive tape to the surface of the first end and the surface of the second end along the width direction of the first electrode sheet band;
attaching the second adhesive tape to a surface of the first adhesive tape adjacent to a first side of the first electrode sheet band in the width direction and a surface of the first electrode sheet band and a surface of the second electrode sheet band adjacent to the first side, along the length direction of the first electrode sheet band; and
attaching the third adhesive tape to the surface of the first adhesive tape adjacent to a second side of the first electrode sheet band in the width direction and the surface of the first electrode sheet band and the surface of the second electrode sheet band adjacent to the second side, along the length direction of the first electrode sheet band.

Document EP4109579 discloses an electrode sheet, comprising:a first electrode sheet band, wherein the first electrode sheet band has a first end along a length direction of the first electrode sheet band;a second electrode sheet band, wherein a length direction of the second electrode sheet band is the same as the length direction of the first electrode sheet band, and the second electrode sheet band has a second end along the length direction of the second electrode sheet band; and an adhesive tape, wherein the adhesive tape is attached to a surface of the first end and a surface of the second end.

### BRIEF DESCRIPTION OF THE DRAWINGS

In order to more clearly illustrate the technical solutions in the embodiments of the present disclosure, the drawings required for use in the embodiments will be briefly introduced below. Obviously, the drawings described below are only some embodiments of the present disclosure. For the person skilled in the art, other drawings can be obtained based on these drawings without creative work.
FIG. 1 is a structural schematic diagram of an adhesive tape provided in the embodiment of the present disclosure;
FIG. 2a is a schematic diagram of glue overflow after being squeezed by a rolling assembly after splicing by the adhesive tape in the related art;
FIG. 2b is a schematic diagram of a change of a glue layer after being squeezed by the rolling assembly after splicing by the adhesive tape in the embodiment of the present disclosure;
FIG. 2c is a structural schematic diagram in which an electrode sheet that has been spliced by the adhesive tape passes the rolling assembly in the embodiment of the present disclosure;
FIG. 3 is a second structural schematic diagram of the adhesive tape provided in the embodiment of the present disclosure;
FIG. 4 is another structural schematic diagram of the adhesive tape in FIG. 3;
FIG. 5 is a third structural schematic diagram of the adhesive tape provided in the embodiment of the present disclosure;
FIG. 6 is another structural schematic diagram of the adhesive tape in FIG. 5;
FIG. 7 is a fourth structural schematic diagram of the adhesive tape provided in the embodiment of the present disclosure.
FIG. 8 is a fifth structural schematic diagram of the adhesive tape provided in an embodiment of the present disclosure;
FIG. 9 is a sixth structural schematic diagram of the adhesive tape provided in an embodiment of the present disclosure;
FIG. 10 is a seventh structural schematic diagram of the adhesive tape provided in an embodiment of the present disclosure;
FIG. 11 is an eighth structural schematic diagram of the adhesive tape provided in an embodiment of the present disclosure;
FIG. 12 is another structural schematic diagram of the adhesive tape in FIG. 1;
FIG. 13 is a structural schematic diagram of the adhesive tape with chamfers provided in an embodiment of the present disclosure;
FIG. 14 is a structural schematic diagram of the adhesive roll provided in an embodiment of the present disclosure;
FIG. 15 is a top view after spliced by the adhesive tape provided in an embodiment of the present disclosure;
FIG. 16 is a flowchart of a splicing method of an electrode sheet provided in an embodiment of the present disclosure.

Explanation of reference signs:
11-rolling assembly; 12-electrode sheet; 12a-first electrode sheet band; 12b-second electrode sheet band;
100-adhesive tape; 100a-first adhesive tape; 100b-second adhesive tape; 100c-third adhesive tape; 110-base film; 111-coating area; 1111-glue coating portion; 1112-spacing portion; 112-blank area; 1121-first blank area; 1122-second blank area; 1123-third blank area; 1124-fourth blank area; 113-chamfer; 120-glue layer;
200-adhesive roll.

### DETAILED DESCRIPTION

Hereinafter, the technical solutions in the embodiments of the present disclosure will be clearly and completely described in conjunction with the accompanying drawings in the embodiments of the present disclosure. Obviously, the described embodiments are only part of the embodiments of the present disclosure, not all of the embodiments.

In the present disclosure, the orientation or position relationship indicated by the terms "on", "below", "left", "right", "front", "back", "top", "bottom", "inside", "outside", "vertical", "horizontal", "lateral", "longitudinal" and the like is based on the orientation or position relationship shown in the drawings. These terms are mainly used to better describe the present disclosure and its embodiments, and are not used to limit the indicated apparatuses, elements or components to have a specific orientation, or to be constructed and operated in a specific orientation.

Moreover, in addition to being used to indicate orientation or position relationship, some of the above terms may also be used to indicate other meanings. For example, the term "on" may also be used to indicate a certain dependency or connection relationship in some cases. For the person skilled in the art, the specific meanings of these terms in the present disclosure can be understood according to the specific circumstances.

In the present disclosure, the terms "install", "set", "provide ", "connect", and "in connection with" may be understood in a broad sense. For example, it may refer to a fixed connection, a detachable connection, or an integral structure. It may refer to a mechanical connection, or an electrical connection. It may refer to a direct connection, or an indirect connection via an intermediate medium. Alternatively, it may refer to an internal communication between two apparatuses, elements, or components. For those of ordinary skills in the art, the specific meanings of the above terms in the present disclosure may be understood according to specific circumstances.

In addition, the terms "first", "second", etc. are used primarily to distinguish different apparatuses, elements or components (the specific types and structures thereof may be the same or different), and are not intended to indicate or imply the relative importance and the quantity of the indicated apparatuses, elements or components. Unless otherwise specified, "multiple/plurality of" means two or more.

When the seam of the electrode sheets after splicing passes through the rolling assembly, the rolling assembly needs to release pressure until the seam leaves the rolling assembly, and then the rolling assembly re-pressurizes the electrode sheet, which affects the processing effect and processing efficiency of the electrode sheet.

The present disclosure provides an electrode sheet and a splicing method of an electrode sheet, which can improve the processing effect and processing efficiency of the electrode sheet.

The present application is described in detail below through specific embodiments.

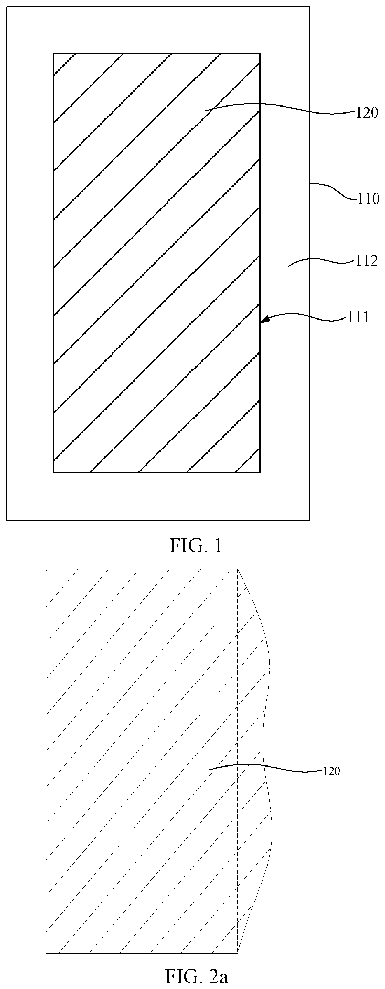

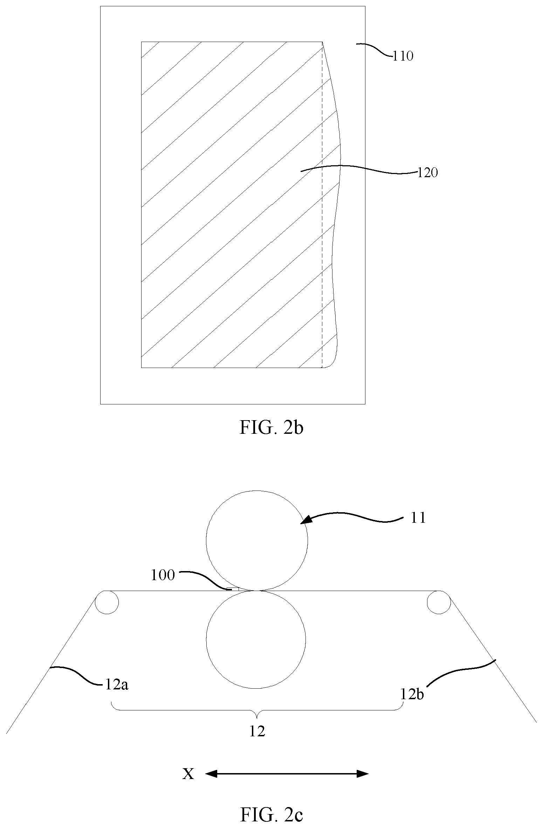

Referring to FIGs. 1, 2a, 2b and 2c, the embodiments of the present application provide an electrode sheet 12, a first electrode sheet band 12a, a second electrode sheet band 12b and an adhesive tape 100. The first electrode sheet band 12a has a first end along a length direction of the first electrode sheet band 12a. The length direction of the second electrode sheet band 12b is the same as the length direction of the first electrode sheet band 12a. The second electrode sheet band 12b has a second end along the length direction of the second electrode sheet band 12b. The adhesive tape 100 is attached to surfaces of the first end and the second end. The adhesive tape 100 comprises a base film 110 and a glue layer 120. The base film 110 comprises a coating area 111 and a blank area 112, and the blank area 112 is arranged around the coating area 111. The glue layer 120 is coated on at least part of the coating area 111, and the coating area 111 is bonded to the surfaces of the first end and the second end respectively through the glue layer 120.

The length direction of the first electrode sheet band 12a and the length direction of the second electrode sheet band 12b both refer to the direction indicated by the X arrow in FIG. 2c, and the base film 110 is rectangular or approximately rectangular. The above-mentioned glue layer 120 is coated on at least part of the coating area 111, which means that the glue layer 120 is coated on the entire coating area 111 or part of the coating area 111.

The blank area 112 is arranged around the coating area 111, and the glue layer 120 is coated on at least part of the coating area 111. When the adhesive tape 100 is used to splice the first electrode sheet band 12a and the second electrode sheet band 12b, the surface of one side of the adhesive tape 100 with the glue layer 120 will adhere to the surfaces of the first end and the second end, that is, the seam of the first electrode sheet band 12a and the second electrode sheet band 12b. When the rolling assembly 11 does not release pressure and squeezes the seam of the first electrode sheet band 12a and the second electrode sheet band 12b adhered by the adhesive tape 100, the glue in the glue layer 120 of the coating area 111 will spread all around. However, because the blank area 112 is arranged around the edges of the coating area 111, the glue spreading all around will not exceed the blank area 112, as shown in FIGs. 2a and 2b. That is, the glue spreading all around will be covered by the base film 110. Therefore, the glue in the glue layer 120 is prevented from overflowing all around the base film 110 when being squeezed, thereby avoiding the situation where the glue adheres to the surface of the rolling assembly 11, and ensuring the rolling effect of the rolling assembly 11 on the first electrode sheet band 12a and the second electrode sheet band 12b.

It can be seen that the adhesive tape 100 in this embodiment can be used without relieving the pressure of the rolling assembly 11 when rolling the first electrode sheet band 12a and the second electrode sheet band 12b, which can not only ensure the rolling effect of the rolling assembly 11 on the first electrode sheet band 12a and the second electrode sheet band 12b, but also simplify the difficulty of operating the pre-slitting apparatus.

In addition, the length direction of the first electrode sheet band 12a is also the direction of travel of the electrode sheet 12, which is the same as the rolling direction of the rolling assembly 11.

In some possible embodiments, referring to FIG. 1, the glue layer 120 is coated on the entire coating area 111.

Since the glue layer 120 is coated on the entire coating area 111, the contact area between the glue layer 120 and the seam of the first electrode sheet band 12a and the second electrode sheet band 12b is increased during the splicing of the first electrode sheet band 12a and the second electrode sheet band 12b, thereby improving the firmness of the splicing of the first electrode sheet band 12a and the second electrode sheet band 12b.

In addition, it may be noted that the shape of the coating area 111 comprises but is not limited to circular, rectangular, trapezoidal, elliptical and other shapes.

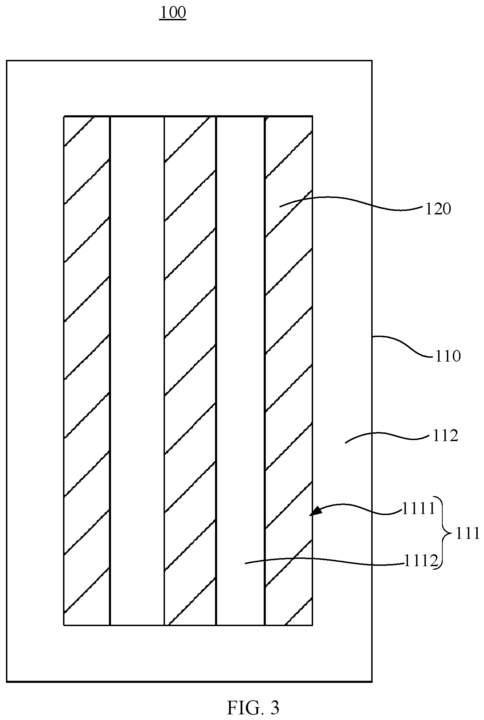

In some possible embodiments, referring to FIG. 3, the glue layer 120 is coated on part of the coating area 111.

Since the glue layer 120 is coated on part of the coating area 111, during the splicing of the first electrode sheet band 12a and the second electrode sheet band 12b, on the premise of ensuring the seam connection effect of the first electrode sheet band 12a and the second electrode sheet band 12b, the waste of the glue layer 120 can be reduced, thereby reducing the cost.

In some possible embodiments, referring to FIG. 3, a portion of the coating area 111 coated with the glue layer 120 forms a glue coating portion 1111, and a portion of the coating area 111 not coated with the glue layer 120 forms a spacing portion 1112. There are multiple glue coating portions 1111, and the spacing portion 1112 is provided between two adjacent glue coating portions 1111.

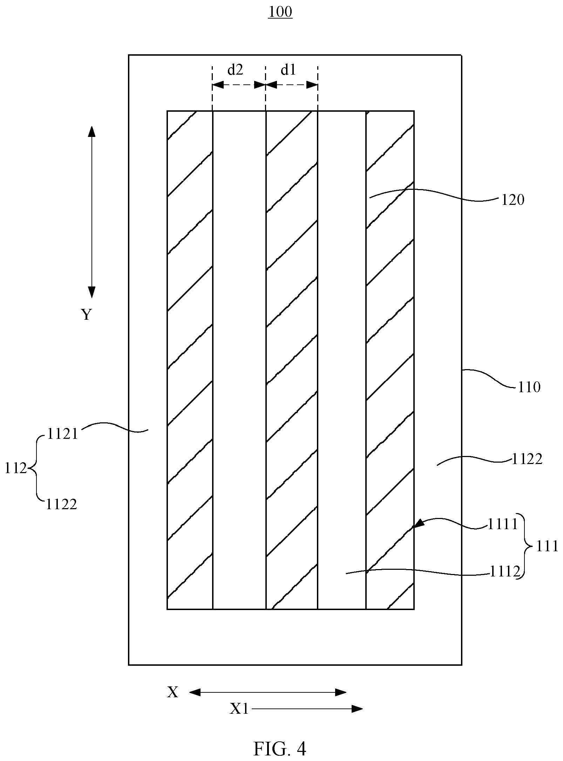

The above-mentioned multiple glue coating portions 1111 refer to two or more glue coating portions 1111. For example, referring to FIG. 4, there are three glue coating portions 1111, and the spacing portion 1112 is provided between each two adjacent glue coating portions 1111. The sides, away from the spacing portion 1112, of two glue coating portions 1111 adjacent to the edges are connected to the blank area 112.

Since there are multiple glue coating portions 1111, and the spacing portion 1112 is provided between two adjacent glue coating portions 1111, after the adhesive tape 100 of this structure is used to splice the seam of the first electrode sheet band 12a and the second electrode sheet band 12b, when the seam passes through the rolling assembly 11, the rolling assembly 11 can squeeze part of the glue in the glue layer 120 on the glue coating portion 1111 toward the spacing portion 1112. In this way, the contact area between the glue layer 120 and the seam of the first electrode sheet band 12a and the second electrode sheet band 12b can be increased, and the seam effect of the first electrode sheet band 12a and the second electrode sheet band 12b can be improved. It can also prevent the glue in the glue layer 120 from accumulating on one side of the coating area 111 along the rolling direction of the rolling assembly 11, thereby improving the uniformity of the distribution of the glue layer 120.

In addition, the distribution of the above-mentioned glue coating portion 1111 in the coating area 111 has a variety of structures. In some possible embodiments, referring to FIG. 4, a plurality of glue coating portions 1111 are arranged at intervals along the length direction of the first electrode sheet band 12a.

The length direction of the first electrode sheet band 12a refers to the direction indicated by the X arrow in FIG. 4, and the length direction of the first electrode sheet band 12a mentioned below refers to the direction indicated by the X arrow.

The multiple glue coating portions 1111 are arranged at intervals along the length direction of the first electrode sheet band 12a, and when the adhesive tape 100 connects the seam of the first electrode sheet band 12a and the second electrode sheet band 12b, the length direction of the adhesive tape 100 is the same as the extension direction of the seam. In other words, the width direction of the first electrode sheet band 12a (i.e., the direction indicated by the Y arrow in FIG. 4, and the width direction of the first electrode sheet band 12a mentioned below refers to the direction indicated by the Y arrow) is the same as the width direction of the second electrode sheet band 12b. In addition, the rolling direction of the rolling assembly 11 is parallel to the length direction of the first electrode sheet band 12a. Therefore, when the rolling assembly 11 rolls the first electrode sheet band 12a and the second electrode sheet band 12b after being spliced, most of the glue in the glue layer 120 on the glue coating portion 1111 can be pushed to spread from one side of the base film 110 to the other side along a direction parallel to the length direction of the first electrode sheet band 12a. As a result, part of the glue in the glue layer 120 on the glue coating portion 1111 can fill at least part of the adjacent spacing portion 1112. On the premise of preventing the glue in the glue layer 120 from overflowing the base film 110, the bonding area between the glue layer 120 and the seam between the first electrode sheet band 12a and the second electrode sheet band 12b can be guaranteed, and the glue in the glue layer 120 can be prevented from accumulating, thereby improving the uniformity of the distribution of the glue layer 120 and the splicing effect.

In some possible embodiments, referring to FIG. 4, the blank area 112 comprises a first blank area 1121 and a second blank area 1122 arranged respectively on two sides of the coating area 111 along the length direction of the first electrode sheet band 12a. Along the arrangement direction of the multiple glue coating portions 1111, the width of the spacing portion 1112 is equal to the width of the second blank area 1122, and the width of the second blank area 1122 is greater than the width of the first blank area 1121.

In this embodiment, the arrangement direction of the multiple glue coating portions 1111 is the same as the length direction of the first electrode sheet band 12a.

Since the rolling direction of the rolling assembly 11 is consistent with the direction from the first blank area 1121 to the second blank area 1122 (i.e., the direction indicated by the arrow X1 in the figure), when the rolling assembly 11 rolls the first electrode sheet band 12a and the second electrode sheet band 12b that are spliced by the adhesive tape 100, more glue in the glue layer 120 of the glue coating portion 1111 can be squeezed along the direction from the first blank area 1121 to the second blank area 1122. As a result, more glue in the glue layer 120 of the glue coating portion 1111 will spread in the spacing portion 1112 and the second blank area 1122. In order to avoid the occurrence of glue overflow and ensure the splicing effect of the adhesive tape 100, the width of the spacing portion 1112 is equal to the width of the second blank area 1122, and the width of the second blank area 1122 is greater than the width of the first blank area 1121.

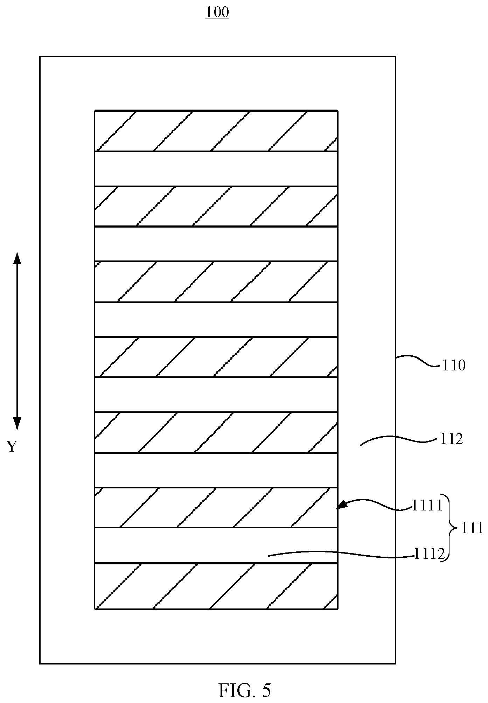

In some other possible embodiments, referring to FIG. 5, multiple glue coating portions 1111 are arranged at intervals along the width direction of the first electrode sheet band 12a.

Since the multiple glue coating portions 1111 are arranged at intervals along the width direction of the first electrode sheet band 12a, the arrangement direction of the multiple glue coating portions 1111 is perpendicular to the rolling direction of the rolling assembly 11. Therefore, when the rolling assembly 11 rolls the first electrode sheet band 12a and the second electrode sheet band 12b that are spliced by the adhesive tape 100 of this structure, a part of the glue in the glue layer 120 on the glue coating portion 1111 spreads along the arrangement direction of the multiple glue coating portions 1111 toward the spacing portion 1112, and another part of the glue spreads along the rolling direction of the rolling assembly 11 toward the spacing portion.

It can be seen that the structure of the adhesive tape 100 in this embodiment does not need to deliberately align the glue coating portion 1111 with the seam of the first electrode sheet band 12a and the second electrode sheet band 12b when splicing the first electrode sheet band 12a and the second electrode sheet band 12b, which simplifies the difficulty of splicing of the adhesive tape 100. At the same time, since part of the glue in the glue layer 120 on the glue coating portion 1111 spreads toward the spacing portion 1112, the bonding area between the glue layer 120 and the seam of the first electrode sheet band 12a and the second electrode sheet band 12b is increased, ensuring the splicing effect of the first electrode sheet band 12a and the second electrode sheet band 12b.

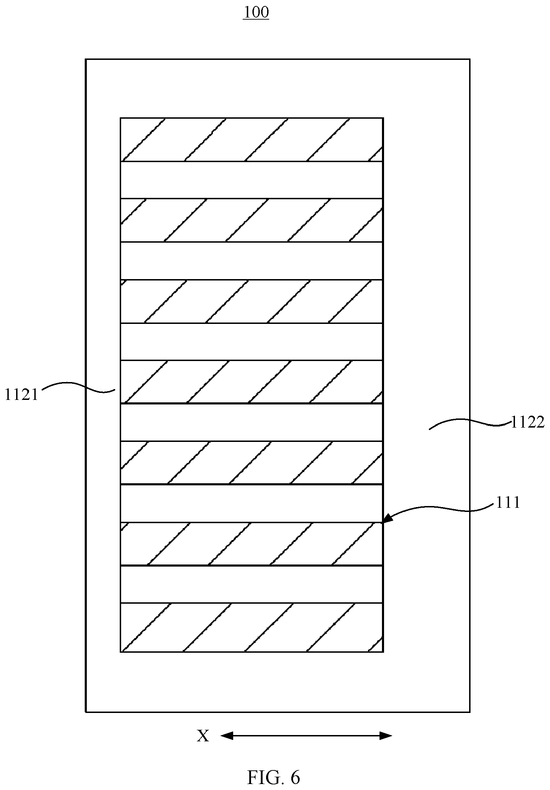

In some possible embodiments, referring to FIG. 6, the blank area 112 comprises a first blank area 1121 and a second blank area 1122 arranged respectively on two sides of the coating area 111 along the length direction of the first electrode sheet band 12a, and the width of the second blank area 1122 is greater than the width of the first blank area 1121.

Since the rolling direction is the same as the direction from the first blank area 1121 to the second blank area 1122, when the rolling assembly 11 rolls the first electrode sheet 12a and the second electrode sheet 12b after being spliced, part of the glue in the glue layer 120 on the glue coating portion 1111 can be squeezed toward the second blank area 1122. It can be seen that more glue in the glue layer 120 on the glue coating portion 1111 spreads toward the second blank area 1122. Therefore, in order to avoid the glue overflowing from the second blank area 1122, the width of the second blank area 1122 is made greater than the width of the first blank area 1121.

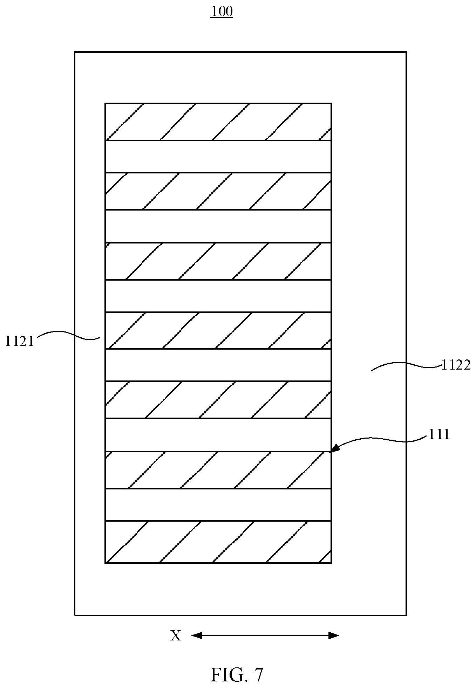

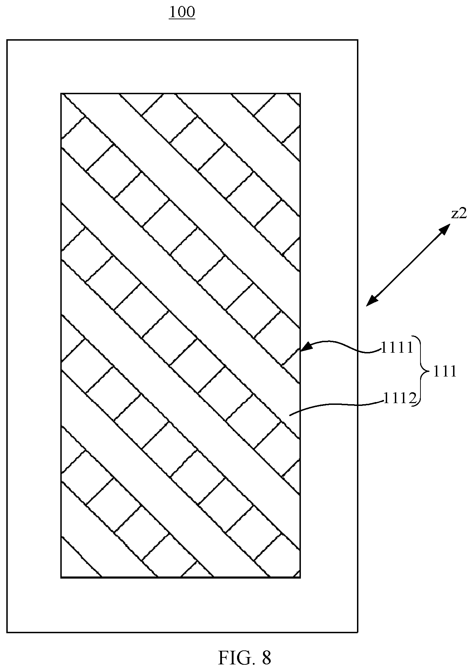

In some possible embodiments, referring to FIGs. 7 and 8, multiple glue coating portions 1111 are arranged at intervals along a direction inclined relative to the width direction of the first electrode sheet band 12a.

In this embodiment, the arrangement direction of the multiple glue coating portions 1111 is the direction indicated by the arrow z1 in FIG. 7, or the direction indicated by the arrow z2 in FIG. 8. In addition, the angle at which the glue coating portion 1111 is inclined relative to the width direction of the first electrode sheet band 12a is not limited. For example, the angle at which the glue coating portion 1111 is inclined relative to the width direction of the first electrode sheet band 12a comprises but is not limited to 30° to 60°, or 120° to 150°.

Since the multiple glue coating portions 1111 are arranged at intervals along the direction inclined relative to the width direction of the first electrode sheet band 12a, the width of the glue layer 120 covering the seam is extended, thereby improving the splicing effect of the first electrode sheet band 12a and the second electrode sheet band 12b. In addition, when the rolling assembly 11 rolls, the glue in the glue layer 120 on the glue coating portion 1111 can spread toward the spacing portion 1112 to increase the bonding area between the seam of the first electrode sheet band 12a and the second electrode sheet band 12b and the adhesive tape 100. Furthermore, the waste of glue is reduced.

In addition, the shape of the glue coating portion 1111 is various. In one possible embodiment, referring to FIG. 4 and FIG. 5, the glue coating portion 1111 is in the shape of a long strip, and the width direction of the long strip is parallel to the arrangement direction of the multiple glue coating portions 1111.

The long strip may be a rectangle, a parallelogram, etc.

Compared with the glue coating portion 1111 in the shape of sheet, the glue coating portion 1111 in the shape of long strip can reduce the waste of glue while satisfying the splicing effect. On the other hand, when the rolling assembly 11 rolls the first electrode sheet band and the second electrode sheet band 12 after being spliced, the glue in the glue layer 120 can be prevented from accumulating on one side of the coating area 111, thereby ensuring the uniformity of the glue layer 120.

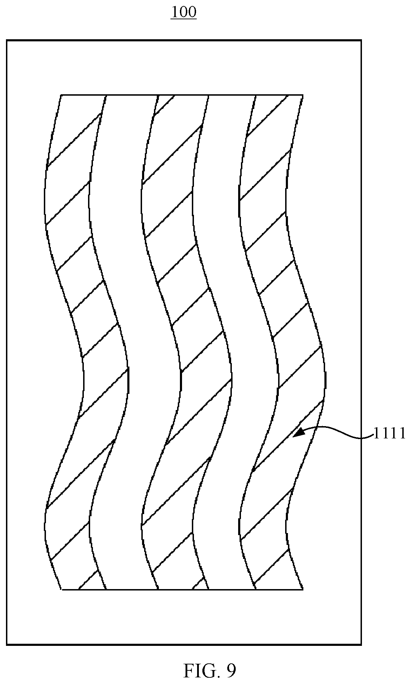

In some possible embodiments, referring to FIG. 9, the glue coating portion 1111 is in the shape of a wave, and the width direction of the wave is parallel to the arrangement direction of the multiple glue coating portions 1111.

Since the glue coating portion 1111 is in the shape of a wave, the length of the wave-shaped glue layer 120 can be extended by coating the wave-shaped glue layer 120 on the glue coating portion 1111 of the same length along the length direction of the base film 110. Similarly, the same is true along the width direction of the base film 110. Thus, the contact area between the glue layer 120 and the seam of the first electrode sheet band 12a and the second electrode sheet band 12b is increased, thereby improving the splicing effect of the first electrode sheet band 12a and the second electrode sheet band 12b.

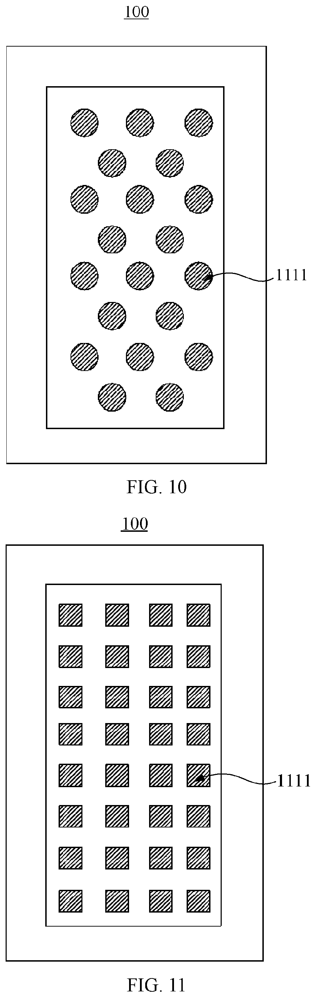

In some possible embodiments, referring to FIG. 10 and FIG. 11, the multiple glue coating portions 1111 are distributed in a dotted manner in the coating area 111.

Since the multiple glue coating portions 1111 are distributed in a dotted manner, the spacing portion 1112 is provided around the edges of each glue coating portion 1111. Therefore, when the rolling assembly 11 rolls the first electrode sheet band 12a and the second electrode sheet band 12b after being spliced, the glue in the glue layer 120 of the glue coating portion 1111 will spread to the surroundings, which can not only ensure the bonding area between the adhesive tape 100 and the seam of the first electrode sheet band 12a and the second electrode sheet band 12b during splicing, but also prevent the glue from overflowing the base film 110, thereby further improving the rolling effect of the rolling assembly 11 and simplifying the operation difficulty of rolling the pre-slitting apparatus.

In some possible embodiments, referring to FIGs. 10 and 11, the glue coating portion 1111 is in a shape of circle or polygon.

The circle may be a perfect circle, an ellipse, etc., and the polygon may be a triangle, a square, a rectangle, a pentagon, etc.

Since the structure of circle or polygon is simple and easy to design, when the glue coating portion 1111 is in the shape of circle or polygon, the design difficulty of the glue coating portion 1111 can be simplified.

In some possible embodiments, referring to FIG. 4, the width of the glue coating portion 1111 is d1, the width of the spacing portion 1112 is d2, and 1≤d1/d2≤2.

If the ratio of d1/d2 is less than 1, it means that the width of the spacing portion 1112 is too large and the width of the glue coating portion 1111 is too small. At this time, the bonding area between the glue layer 120 and the seam of the first electrode sheet band 12a and the second electrode sheet band 12b is small, thereby affecting the splicing effect of the first electrode sheet band 12a and the second electrode sheet band 12b. If the ratio of d1/d2 is greater than 2, it means that the width of the spacing portion 1112 is too small and the width of the glue coating portion 1111 is too large. Although the splicing effect of the first electrode sheet band 12a and the second electrode sheet band 12b can be ensured, since the glue coating portion 1111 is too large, there is more glue in the glue layer 120 on the glue coating portion 1111. When the rolling assembly 11 squeezes the first electrode sheet band 12a and the second electrode sheet band 12b that have been spliced, glue overflow or accumulation of the glue layer 120 is likely to occur. Therefore, through comprehensive consideration, 1≤d1/d2≤2 can not only ensure the splicing effect of the first electrode sheet band 12a and the second electrode sheet band 12b, but also avoid the occurrence of glue overflow and the accumulation of the glue layer 120 due to squeezing by the rolling assembly 11.

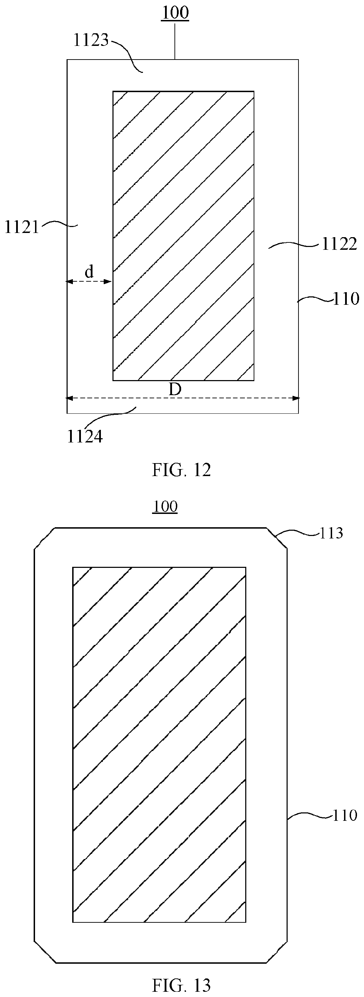

In some possible embodiments, referring to FIG. 12, the blank area 112 comprises a first blank area 1121 and a second blank area 1122 arranged respectively on two sides of the coating area 111 along the length direction of the first electrode sheet band 12a, and a third blank area 1123 and a fourth blank area 1124 arranged respectively on two sides of the coating area 111 along the width direction of the first electrode sheet band 12a. The widths of the first blank area 1121 and the second blank area 1122 are both greater than the widths of the third blank area 1123 and the fourth blank area 1124.

Since the rolling direction of the rolling assembly 11 points from the first blank area 1121 to the second blank area 1122, or from the second blank area 1122 to the first blank area 1121, when the rolling assembly 11 squeezes the first electrode sheet band 12a and the second electrode sheet band 12b that have been spliced, the glue in the glue layer 120 on the coating area 111 can spread toward the second blank area 1122 or the first blank area 1121. It can be seen that a small amount of glue in the glue layer 120 on the coating area 111 spreads toward the third blank area 1123 or the fourth blank area 1124. Therefore, the widths of the first blank area 1121 and the second blank area 1122 are greater than the widths of the third blank area 1123 and the fourth blank area 1124, which can ensure the splicing effect and avoid glue overflow.

In some possible embodiments, referring to FIG. 12, in the length direction of the first electrode sheet band 12a, the widths of the first blank area 1121 and the second blank area 1122 are both d, the width of the base film 110 is D, and 1/7≤d/D≤1/4.

If the ratio of d/D is less than 1/7, it means that the coating area 111 is relatively large, then the glue layer 120 arranged in the coating area 111 is relatively large, and the first blank area 1121 and the second blank area 1122 are relatively small. Therefore, when the rolling assembly 11 rolls the first electrode sheet band 12a and the second electrode sheet band 12b that have been spliced, the rolling assembly 11 is easy to squeeze the glue layer 120 of the coating area 111 beyond the first blank area 1121 or the second blank area 1122, thereby causing glue overflow. If the ratio of d/D is greater than 1/4, it means that the coating area 111 is relatively small, and the first blank area 1121 and the second blank area 1122 are relatively large. When the first electrode sheet band 12a and the second electrode sheet band 12b are spliced, the bonding area between the adhesive tape 100 and the seam of the first electrode sheet band 12a and the second electrode sheet band 12b is relatively small, thereby affecting the splicing effect of the first electrode sheet band 12a and the second electrode sheet band 12b. Based on this, 1/7≤d/D≤1/4 is made, so that the overflow of glue can be avoided and the splicing effect of the first electrode sheet band 12a and the second electrode sheet band 12b can be improved.

In some possible embodiments, referring to FIG. 13, four corners of the base film 110 are all provided with chamfers 113.

The above-mentioned chamfer 113 may be a square chamfer or rounded chamfer.

By providing the chamfers 113 at all four corners of the base film 110, it is possible to facilitate the alignment of the edge of the base film 110 with the edges of the first electrode sheet band 12a and the second electrode sheet band 12b, further improving the splicing effect of the first electrode sheet band 12a and the second electrode sheet band 12b.

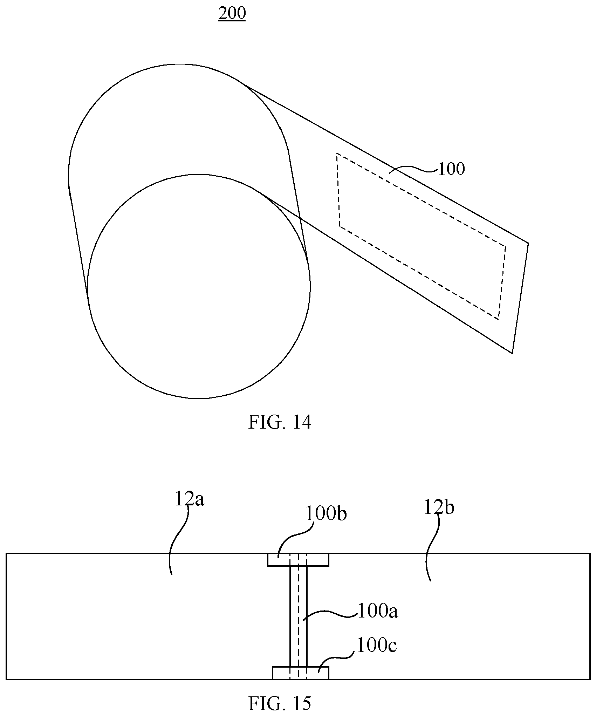

Referring to FIG. 14, the embodiments of the present application also provide an adhesive roll 200, which comprises the adhesive tape 100 in the above embodiment. There are a plurality of adhesive tapes 100, and the plurality of adhesive tapes 100 are sequentially connected and wound along the length direction of the adhesive tapes 100.

The adhesive tape 100 in the embodiments of the present application may have the same structure as any of the adhesive tapes 100 in the above embodiments, and can bring the same or similar beneficial effects. For details, the description in the above embodiments may be referred to, which will not be repeated in the embodiments of the present application here.

Since the adhesive roll 200 in this embodiment comprises the adhesive tape 100 in the above embodiments, the adhesive roll 200 in this embodiment can improve the splicing efficiency of the first electrode sheet band 12a and the second electrode sheet band 12b when splicing the first electrode sheet band 12a and the second electrode sheet band 12b.

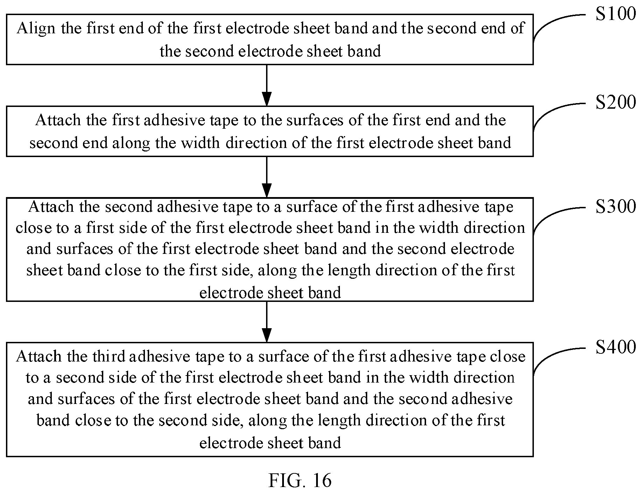

Referring to FIGs. 15 and 16, the present application also provides a splicing method of an electrode sheet, which is used to splice the electrode sheet in the above embodiments. The adhesive tape 100 comprises a first adhesive tape 100a, a second adhesive tape 100b and a third adhesive tape 100c. The method comprises the following steps.

In S100, the first end of the first electrode sheet band and the second end of the second electrode sheet band are aligned.

In S200, the first adhesive tape is attached to the surfaces of the first end and the second end along the width direction of the first electrode sheet band.

In S300, the second adhesive tape is attached to a surface of the first adhesive tape adjacent to a first side of the first electrode sheet band in the width direction and surfaces of the first electrode sheet band and the second electrode sheet band adjacent to the first side, along the length direction of the first electrode sheet band.

In S400, the third adhesive tape is attached to a surface of the first adhesive tape adjacent to a second side of the first electrode sheet band in the width direction and surfaces of the first electrode sheet band and the second adhesive band adjacent to the second side, along the length direction of the first electrode sheet band.

Since the second adhesive tape 100b is attached to the surface of the first adhesive tape 100a adjacent to the first side and the surfaces of the first electrode sheet band 12a and the second electrode sheet band 12b adjacent to the first side, the bonding area between the adhesive tape 100 and the surface of the first electrode sheet band 12a adjacent to the first side and the bonding area between the adhesive tape 100 and the surface of the second electrode sheet band 12b adjacent to the first side can be increased, thereby improving the bonding strength of the portion of the adhesive tape 100 adjacent to the first side. Similarly, the third adhesive tape 100c is attached to the surface of the first adhesive tape 100a adjacent to the second side and the surfaces of the first electrode sheet band 12a and the second electrode sheet band 12b adjacent to the second side, which can improve the bonding strength of the portion of the adhesive tape 100 adjacent to the second side.

Therefore, by attaching the second adhesive tape 100b to the surface of the first adhesive tape 100a adjacent to the first side and the surfaces of the first electrode sheet band 12a and the second electrode sheet band 12b adjacent to the first side, and by attaching the third adhesive tape 100c to the surface of the first adhesive tape 100a adjacent to the second side and the surfaces of the first electrode sheet band 12a and the second electrode sheet band 12b adjacent to the second side, the bonding strength of the adhesive tape 100 to the first electrode sheet band 12a and the second electrode sheet band 12b can be strengthened.

Finally, it may be noted that the above embodiments are only used to illustrate the technical solutions of the present disclosure, rather than to limit them.

## Claims

1. An electrode sheet (12), comprising:
a first electrode sheet band (12a), wherein the first electrode sheet band (12a) has a first end along a length direction of the first electrode sheet band;
a second electrode sheet band (12b), wherein a length direction of the second electrode sheet band (12b) is the same as the length direction of the first electrode sheet band (12a), and the second electrode sheet band (12b) has a second end along the length direction of the second electrode sheet band (12b); and
an adhesive tape (100), wherein the adhesive tape (100) is attached to a surface of the first end and a surface of the second end, **characterised in that** the adhesive tape (100) comprises:
a base film (110), wherein the base film (110) comprises a coating area (111) and a blank area (112), and the blank area (112) is arranged around the coating area (111); and
a glue layer (120), wherein the glue layer (120) is coated on at least a part of the coating area (111), and the coating area (111) is bonded to the surface of the first end and the surface of the second end respectively through the glue layer (120).

2. The electrode sheet (12) according to claim 1, wherein the glue layer (120) is coated on an entire area of the coating area (111).

3. The electrode sheet (12) according to claim 1, wherein the glue layer (120) is coated on the part of the coating area (111).

4. The electrode sheet (12) according to claim 3, wherein a portion of the coating area (111) coated with the glue layer (120) forms a glue coating portion (1111), and a portion of the coating area (111) not coated with the glue layer (120) forms a spacing portion (1112);
a plurality of the glue coating portions (1111) is provided, and the spacing portion (1112) is arranged between two adjacent glue coating portions (1111).

5. The electrode sheet (12) according to claim 4, wherein the plurality of the glue coating portions (1111) are arranged at an interval along the length direction of the first electrode sheet band (12a).

6. The electrode sheet (12) according to claim 5, wherein the blank area (112) comprises a first blank area (1121) and a second blank area (1122) arranged respectively on two sides of the coating area (111) along the length direction of the first electrode sheet band (12a);
along the length direction of the first electrode sheet band (12a), a width of the spacing portion (1112) is equal to a width of the second blank area (1122), and the width of the second blank area (1122) is greater than a width of the first blank area (1121).

7. The electrode sheet (12) according to claim 4, wherein the plurality of the glue coating portions (1111) are arranged at an interval along a width direction of the first electrode sheet band (12a).

8. The electrode sheet (12) according to claim 7, wherein the blank area (112) comprises a first blank area (1121) and a second blank area (1122) arranged respectively on two sides of the coating area (111) along the length direction of the first electrode sheet band (12a), and a width of the second blank area (1122) is greater than a width of the first blank area (1121).

9. The electrode sheet (12) according to claim 4, wherein the plurality of the glue coating portions (1111) are arranged at an interval along a direction inclined relative to the length direction of the first electrode sheet band (12a).

10. The electrode sheet (12) according to any one of claims 5 to 9, wherein the glue coating portion (1111) is in a shape of a long strip, and a width direction of the long strip is parallel to an arrangement direction of the plurality of the glue coating portions (1111).

11. The electrode sheet (12) according to any one of claims 5 to 9, wherein the glue coating portion (1111) is in a shape of a wave, and a width direction of the wave is parallel to an arrangement direction of the plurality of the glue coating portions (1111).

12. The electrode sheet (12) according to claim 4, wherein the plurality of the glue coating portions (1111) are distributed in the coating area (111) in a dotted manner,
wherein the glue coating portion (1111) is in a shape of a circle or a polygon.

13. The electrode sheet (12) according to any one of claims 1 to 12, wherein the blank area (112) comprises a first blank area (1121) and a second blank area (1122) arranged respectively on two sides of the coating area (111) along the length direction of the first electrode sheet band (12a), and a third blank area (1123) and a fourth blank area (1124) arranged respectively on two sides of the coating area (111) along a width direction of the first electrode sheet band (12a), and a width of the first blank area (1121) and a width of the second blank area (1122) are both greater than a width of the third blank area (1123) and a width of the fourth blank area (1124).

14. The electrode sheet (12) according to any one of claims 1 to 13, wherein four corners of the base film (110) are all provided with chamfers.

15. A splicing method of an electrode sheet (12), wherein the method is used to splice the electrode sheet (12) according to any one of claims 1 to 14, an adhesive tape (100) comprises a first adhesive tape (100a), a second adhesive tape (100b) and a third adhesive tape (100c), and the splicing method comprises:
aligning (S100) a first end of a first electrode sheet band (12a) with a second end of a second electrode sheet band (12b);
attaching (S200) the first adhesive tape (100a) to a surface of the first end and a surface of the second end along a width direction of the first electrode sheet band (12a);
attaching (S300) the second adhesive tape (100b) to a surface of the first adhesive tape (100a) adjacent to a first side of the first electrode sheet band (12a) in the width direction and a surface of the first electrode sheet band (12a) and a surface of the second electrode sheet band (12b) adjacent to the first side, along a length direction of the first electrode sheet band (12a); and
attaching (S400) the third adhesive tape (100c) to the surface of the first adhesive tape (100a) adjacent to a second side of the first electrode sheet band (12a) in the width direction and the surface of the first electrode sheet band (12a) and the surface of the second electrode sheet band (12b) adjacent to the second side, along the length direction of the first electrode sheet band (12b).

## Patentansprüche

1. Elektrodenblatt (12), umfassend:
ein erstes Elektrodenblattband (12a), wobei das erste Elektrodenblattband (12a) ein erstes Ende entlang einer Längsrichtung des ersten Elektrodenblattbands aufweist;
ein zweites Elektrodenblattband (12b), wobei eine Längsrichtung des zweiten Elektrodenblattbands (12b) dieselbe ist wie die Längsrichtung des ersten Elektrodenblattbands (12a), und das zweite Elektrodenblattband (12b) ein zweites Ende entlang der Längsrichtung des zweiten Elektrodenblattbands (12b) aufweist; und
ein Klebeband (100), wobei das Klebeband (100) an einer Oberfläche des ersten Endes und einer Oberfläche des zweiten Endes angebracht ist,
**dadurch gekennzeichnet, dass**
das Klebeband (100) umfasst:
eine Basisfolie (110), wobei die Basisfolie (110) einen Beschichtungsbereich (111) und einen unbeschichteten Bereich (112) umfasst, und der unbeschichtete Bereich (112) um den Beschichtungsbereich (111) herum angeordnet ist; und
eine Klebstoffschicht (120), wobei die Klebstoffschicht (120) auf mindestens einen Teil des Beschichtungsbereichs (111) aufgebracht ist, und der Beschichtungsbereich (111) jeweils über die Klebstoffschicht (120) mit der Oberfläche des ersten Endes und der Oberfläche des zweiten Endes verbunden ist.

2. Elektrodenblatt (12) nach Anspruch 1, wobei die Klebstoffschicht (120) auf eine gesamte Fläche des Beschichtungsbereichs (111) aufgebracht ist.

3. Elektrodenblatt (12) nach Anspruch 1, wobei die Klebstoffschicht (120) auf den Teil des Beschichtungsbereichs (111) aufgebracht ist.

4. Elektrodenblatt (12) nach Anspruch 3, wobei ein Abschnitt des Beschichtungsbereichs (111), der mit der Klebstoffschicht (120) beschichtet ist, einen Klebstoffbeschichtungsabschnitt (1111) bildet, und ein Abschnitt des Beschichtungsbereichs (111), der nicht mit der Klebstoffschicht (120) beschichtet ist, einen Abstandsabschnitt (1112) bildet;
eine Mehrzahl der Klebstoffbeschichtungsabschnitte (1111) vorgesehen ist, und der Abstandsabschnitt (1112) zwischen zwei benachbarten Klebstoffbeschichtungsabschnitten (1111) angeordnet ist.

5. Elektrodenblatt (12) nach Anspruch 4, wobei die Mehrzahl der Klebstoffbeschichtungsabschnitte (1111) in einem Abstand entlang der Längsrichtung des ersten Elektrodenblattbands (12a) angeordnet sind.

6. Elektrodenblatt (12) nach Anspruch 5, wobei der unbeschichtete Bereich (112) einen ersten unbeschichteten Bereich (1121) und einen zweiten unbeschichteten Bereich (1122) umfasst, die jeweils auf zwei Seiten des Beschichtungsbereichs (111) entlang der Längsrichtung des ersten Elektrodenblattbands (12a) angeordnet sind;
entlang der Längsrichtung des ersten Elektrodenblattbands (12a) eine Breite des Abstandsabschnitts (1112) gleich einer Breite des zweiten unbeschichteten Bereichs (1122) ist, und die Breite des zweiten unbeschichteten Bereichs (1122) größer ist als eine Breite des ersten unbeschichteten Bereichs (1121).

7. Elektrodenblatt (12) nach Anspruch 4, wobei die Mehrzahl der Klebstoffbeschichtungsabschnitte (1111) in einem Abstand entlang einer Breitenrichtung des ersten Elektrodenblattbands (12a) angeordnet sind.

8. Elektrodenblatt (12) nach Anspruch 7, wobei der unbeschichtete Bereich (112) einen ersten unbeschichteten Bereich (1121) und einen zweiten unbeschichteten Bereich (1122) umfasst, die jeweils auf zwei Seiten des Beschichtungsbereichs (111) entlang der Längsrichtung des ersten Elektrodenblattbands (12a) angeordnet sind, und eine Breite des zweiten unbeschichteten Bereichs (1122) größer ist als eine Breite des ersten unbeschichteten Bereichs (1121).

9. Elektrodenblatt (12) nach Anspruch 4, wobei die Mehrzahl der Klebstoffbeschichtungsabschnitte (1111) in einem Abstand entlang einer Richtung angeordnet sind, die relativ zu der Längsrichtung des ersten Elektrodenblattbands (12a) geneigt ist.

10. Elektrodenblatt (12) nach einem der Ansprüche 5 bis 9, wobei der Klebstoffbeschichtungsabschnitt (1111) die Form eines langen Streifens aufweist, und eine Breitenrichtung des langen Streifens parallel zu einer Anordnungsrichtung der Mehrzahl der Klebstoffbeschichtungsabschnitte (1111) ist.

11. Elektrodenblatt (12) nach einem der Ansprüche 5 bis 9, wobei der Klebstoffbeschichtungsabschnitt (1111) die Form einer Welle aufweist, und eine Breitenrichtung der Welle parallel zu einer Anordnungsrichtung der Mehrzahl der Klebstoffbeschichtungsabschnitte (1111) ist.

12. Elektrodenblatt (12) nach Anspruch 4, wobei die Mehrzahl der Klebstoffbeschichtungsabschnitte (1111) punktförmig in dem Beschichtungsbereich (111) verteilt sind,
wobei der Klebstoffbeschichtungsabschnitt (1111) die Form eines Kreises oder eines Polygons aufweist.

13. Elektrodenblatt (12) nach einem der Ansprüche 1 bis 12, wobei der unbeschichtete Bereich (112) einen ersten unbeschichteten Bereich (1121) und einen zweiten unbeschichteten Bereich (1122), die jeweils auf zwei Seiten des Beschichtungsbereichs (111) entlang der Längsrichtung des ersten Elektrodenblattbands (12a) angeordnet sind, und einen dritten unbeschichteten Bereich (1123) und einen vierten unbeschichteten Bereich (1124), die jeweils auf zwei Seiten des Beschichtungsbereichs (111) entlang einer Breitenrichtung des ersten Elektrodenblattbands (12a) angeordnet sind, umfasst, und eine Breite des ersten unbeschichteten Bereichs (1121) und eine Breite des zweiten unbeschichteten Bereichs (1122) beide größer sind als eine Breite des dritten unbeschichteten Bereichs (1123) und eine Breite des vierten unbeschichteten Bereichs (1124).

14. Elektrodenblatt (12) nach einem der Ansprüche 1 bis 13, wobei vier Ecken der Basisfolie (110) alle mit Fasen versehen sind.

15. Spleißverfahren eines Elektrodenblatts (12), wobei das Verfahren dazu verwendet wird, das Elektrodenblatt (12) nach einem der Ansprüche 1 bis 14 zu spleißen, ein Klebeband (100) ein erstes Klebeband (100a), ein zweites Klebeband (100b) und ein drittes Klebeband (100c) umfasst, und das Spleißverfahren umfasst:
Ausrichten (5100) eines ersten Endes eines ersten Elektrodenblattbands (12a) mit einem zweiten Ende eines zweiten Elektrodenblattbands (12b);
Anbringen (5200) des ersten Klebebands (100a) an einer Oberfläche des ersten Endes und einer Oberfläche des zweiten Endes entlang einer Breitenrichtung des ersten Elektrodenblattbands (12a);
Anbringen (5300) des zweiten Klebebands (100b) an einer Oberfläche des ersten Klebebands (100a), die an eine erste Seite des ersten Elektrodenblattbands (12a) in der Breitenrichtung angrenzt, und an einer Oberfläche des ersten Elektrodenblattbands (12a) und einer Oberfläche des zweiten Elektrodenblattbands (12b), die an die erste Seite angrenzen, entlang einer Längsrichtung des ersten Elektrodenblattbands (12a); und
Anbringen (5400) des dritten Klebebands (100c) an der Oberfläche des ersten Klebebands (100a), die an eine zweite Seite des ersten Elektrodenblattbands (12a) in der Breitenrichtung angrenzt, und an der Oberfläche des ersten Elektrodenblattbands (12a) und der Oberfläche des zweiten Elektrodenblattbands (12b), die an die zweite Seite angrenzen, entlang der Längsrichtung des ersten Elektrodenblattbands (12b).

## Revendications

1. Feuille d'électrode (12), comprenant :
une première bande de feuille d'électrode (12a), dans laquelle la première bande de feuille d'électrode (12a) présente une première extrémité le long d'une direction longitudinale de la première bande de feuille d'électrode ;
une seconde bande de feuille d'électrode (12b), dans laquelle une direction longitudinale de la seconde bande de feuille d'électrode (12b) est identique à la direction longitudinale de la première bande de feuille d'électrode (12a), et la seconde bande de feuille d'électrode (12b) présente une seconde extrémité le long de la direction longitudinale de la seconde bande de feuille d'électrode (12b) ; et
un ruban adhésif (100), dans lequel le ruban adhésif (100) est fixé à une surface de la première extrémité et à une surface de la seconde extrémité,
**caractérisée en ce que**
le ruban adhésif (100) comprend :
un film de base (110), dans lequel le film de base (110) comprend une zone de revêtement (111) et une zone vierge (112), et la zone vierge (112) est disposée autour de la zone de revêtement (111) ; et
une couche de colle (120), dans laquelle la couche de colle (120) est appliquée sur au moins une partie de la zone de revêtement (111), et la zone de revêtement (111) est collée respectivement à la surface de la première extrémité et à la surface de la seconde extrémité par l'intermédiaire de la couche de colle (120).

2. Feuille d'électrode (12) selon la revendication 1, dans laquelle la couche de colle (120) est appliquée sur toute la surface de la zone de revêtement (111).

3. Feuille d'électrode (12) selon la revendication 1, dans laquelle la couche de colle (120) est appliquée sur ladite partie de la zone de revêtement (111).

4. Feuille d'électrode (12) selon la revendication 3, dans laquelle une portion de la zone de revêtement (111) revêtue de la couche de colle (120) forme une portion de revêtement de colle (1111), et une portion de la zone de revêtement (111) non revêtue de la couche de colle (120) forme une portion d'espacement (1112) ;
une pluralité des portions de revêtement de colle (1111) est prévue, et la portion d'espacement (1112) est disposée entre deux portions de revêtement de colle (1111) adjacentes.

5. Feuille d'électrode (12) selon la revendication 4, dans laquelle la pluralité des portions de revêtement de colle (1111) sont disposées à intervalles le long de la direction longitudinale de la première bande de feuille d'électrode (12a).

6. Feuille d'électrode (12) selon la revendication 5, dans laquelle la zone vierge (112) comprend une première zone vierge (1121) et une seconde zone vierge (1122) disposées respectivement sur deux côtés de la zone de revêtement (111) le long de la direction longitudinale de la première bande de feuille d'électrode (12a) ;
le long de la direction longitudinale de la première bande de feuille d'électrode (12a), une largeur de la portion d'espacement (1112) est égale à une largeur de la seconde zone vierge (1122), et la largeur de la seconde zone vierge (1122) est supérieure à une largeur de la première zone vierge (1121).

7. Feuille d'électrode (12) selon la revendication 4, dans laquelle la pluralité des portions de revêtement de colle (1111) sont disposées à intervalles le long d'une direction de largeur de la première bande de feuille d'électrode (12a).

8. Feuille d'électrode (12) selon la revendication 7, dans laquelle la zone vierge (112) comprend une première zone vierge (1121) et une seconde zone vierge (1122) disposées respectivement sur deux côtés de la zone de revêtement (111) le long de la direction longitudinale de la première bande de feuille d'électrode (12a), et une largeur de la seconde zone vierge (1122) est supérieure à une largeur de la première zone vierge (1121).

9. Feuille d'électrode (12) selon la revendication 4, dans laquelle la pluralité des portions de revêtement de colle (1111) sont disposées à intervalles le long d'une direction inclinée par rapport à la direction longitudinale de la première bande de feuille d'électrode (12a).

10. Feuille d'électrode (12) selon l'une quelconque des revendications 5 à 9, dans laquelle la portion de revêtement de colle (1111) a la forme d'une longue bande, et une direction de largeur de la longue bande est parallèle à une direction d'agencement de la pluralité des portions de revêtement de colle (1111).

11. Feuille d'électrode (12) selon l'une quelconque des revendications 5 à 9, dans laquelle la portion de revêtement de colle (1111) a la forme d'une onde, et une direction de largeur de l'onde est parallèle à une direction d'agencement de la pluralité des portions de revêtement de colle (1111).

12. Feuille d'électrode (12) selon la revendication 4, dans laquelle la pluralité des portions de revêtement de colle (1111) sont réparties de manière ponctuelle dans la zone de revêtement (111),
dans laquelle la portion de revêtement de colle (1111) a la forme d'un cercle ou d'un polygone.

13. Feuille d'électrode (12) selon l'une quelconque des revendications 1 à 12, dans laquelle la zone vierge (112) comprend une première zone vierge (1121) et une seconde zone vierge (1122) disposées respectivement sur deux côtés de la zone de revêtement (111) le long de la direction longitudinale de la première bande de feuille d'électrode (12a), et une troisième zone vierge (1123) et une quatrième zone vierge (1124) disposées respectivement sur deux côtés de la zone de revêtement (111) le long d'une direction de largeur de la première bande de feuille d'électrode (12a), et une largeur de la première zone vierge (1121) et une largeur de la seconde zone vierge (1122) sont toutes deux supérieures à une largeur de la troisième zone vierge (1123) et à une largeur de la quatrième zone vierge (1124).

14. Feuille d'électrode (12) selon l'une quelconque des revendications 1 à 13, dans laquelle les quatre coins du film de base (110) sont tous pourvus de chanfreins.

15. Procédé d'épissage d'une feuille d'électrode (12), dans lequel le procédé est utilisé pour épisser la feuille d'électrode (12) selon l'une quelconque des revendications 1 à 14, un ruban adhésif (100) comprend un premier ruban adhésif (100a), un deuxième ruban adhésif (100b) et un troisième ruban adhésif (100c), et le procédé d'épissage comprend :
l'alignement (5100) d'une première extrémité d'une première bande de feuille d'électrode (12a) avec une seconde extrémité d'une seconde bande de feuille d'électrode (12b) ;
la fixation (5200) du premier ruban adhésif (100a) à une surface de la première extrémité et à une surface de la seconde extrémité le long d'une direction de largeur de la première bande de feuille d'électrode (12a) ;
la fixation (5300) du deuxième ruban adhésif (100b) à une surface du premier ruban adhésif (100a) adjacente à un premier côté de la première bande de feuille d'électrode (12a) dans la direction de largeur et à une surface de la première bande de feuille d'électrode (12a) et à une surface de la seconde bande de feuille d'électrode (12b) adjacentes au premier côté, le long d'une direction longitudinale de la première bande de feuille d'électrode (12a) ; et
la fixation (5400) du troisième ruban adhésif (100c) à la surface du premier ruban adhésif (100a) adjacente à un second côté de la première bande de feuille d'électrode (12a) dans la direction de largeur et à la surface de la première bande de feuille d'électrode (12a) et à la surface de la seconde bande de feuille d'électrode (12b) adjacentes au second côté, le long de la direction longitudinale de la première bande de feuille d'électrode (12b).
